(19) Europäisches Patentamt
European Patent Office
Office européen des brevets

(11) Veröffentlichungsnummer: **0 050 738**
**A1**

(12) **EUROPÄISCHE PATENTANMELDUNG**

(21) Anmeldenummer: **81107456.6**

(22) Anmeldetag: **19.09.81**

(51) Int. Cl.³: **B 27 K 3/40**
A 01 N 43/64, C 07 D 405/06

(30) Priorität: **28.10.80 DE 3040499**

(43) Veröffentlichungstag der Anmeldung:
**05.05.82 Patentblatt 82/18**

(84) Benannte Vertragsstaaten:
**AT BE CH DE FR GB IT LI LU NL SE**

(71) Anmelder: **BASF Aktiengesellschaft**
**Carl-Bosch-Strasse 38**
**D-6700 Ludwigshafen(DE)**

(72) Erfinder: **Pommer, Ernst-Heinrich, Dr.**
**Berliner Platz 7**
**D-6703 Limburgerhof(DE)**

(54) **Holzschutzmittel.**

(57) Holzschutzmittel enthaltend ein Triazolylmethylketal der Formel

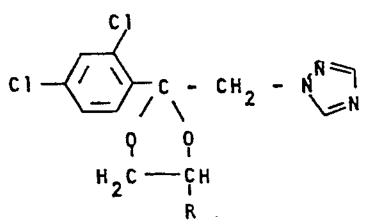

in der R einen Alkylrest mit 2 bis 3 C-Atomen bedeutet und Verfahren zur Behandlung von Holz mit diesen Verbindungen.

EP 0 050 738 A1

## Holzschutzmittel

Die vorliegende Erfindung betrifft ein Holzschutzmittel, das ein Triazolylmethylketal als Wirkstoff enthält.

Es ist aus der DE-OS 25 51 560 bekannt, 1-(ß-Aryl)-alkyl-1H-1,2,4-triazolketale als Fungizide in der Landwirtschaft zur Bekämpfung phytopathogener Pilze zu verwenden. Auch können die Substanzen zur Behandlung von Tieren und Menschen eingesetzt werden, die durch Einwirkung pathogener Mikroorganismen erkrankt sind.

Es wurde nun überraschend gefunden, daß Triazolylmethylketale der Formel

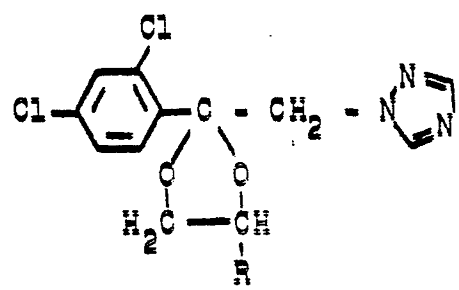

in der R einen Alkylrest mit 2 bis 3 C-Atomen bedeutet, eine sehr gute Wirksamkeit gegen holzverfärbende Pilze, Moderfäulepilze und holzzerstörende Pilze aufweisen. Besonders wirksam sind die Verbindungen 1-[2-(2,4-Dichlorphenyl)-4-ethyl-1,3-dioxolan-2-yl-methyl]-1H-1,2,4-triazol (Verbindung A) und 1-[2-(2,4-Dichlorphenyl)-4-propyl-1,3-dioxolan-2-yl-methyl]-1H-1,2,4-triazol (Verbindung B). Das breite Wirkungsspektrum der Wirkstoffe im Holzschutz konnte nicht vorhergesehen werden, da andere bekannte, in der Landwirtschaft verwendete Triazolderivate, wie das 1-(4-Chlorphenoxy)-3,3-dimethyl-1-(1H-1,2,4-triazol-1-yl)-2-butanon (Verbindung 1) (DE-OS 22 01 063) und das Bis-phenyl-(3-trifluormethyl-phenyl)-1-(1,2,4-tria-

Swa/P

zolyl)-methan (Verbindung 2) zwar eine ausgezeichnete fungizide Wirkung gegen phytopathogene Pilze haben, aber gegen holzverfärbende Pilze und Moderfäulepilze praktisch unwirksam sind.

Folgende holz- und anstrichfärbende Pilze, Moderfäulepilze und holzzerstörende Pilze lassen sich beispielsweise mit den erfindungsgemäßen Holzschutzmitteln bekämpfen: Pullularia (Aureobasidium pullulans), Sclerophoma pityophila, Ceratocystis spec., Paecilomyces variotii, Hormiscium spec., Stemphylium spec., Phoma violacea, Cladosporium herbarum, Trichoderma viride, Chaetomium globosum, Humicola grisea, Merulius lacrimans, Coniophora puteana, Lentinus lepideus, Lenzites trabea, Trametes versicolor, Stereum hirsutum, Fomes annosus.

Die neuen Wirkstoffe können in Zubereitungen, wie Lösungen, Emulsionen, Pasten und Öldispersionen, angewendet werden. Die Zubereitungen enthalten im allgemeinen zwischen 0,1 und 90 Gew.-% Wirkstoff, vorzugsweise 0,25 bis 50 %. Die Aufwandmengen betragen je nach Art des gewünschten Effektes 0,5 bis 8 g Wirkstoff je $m^2$ zu schützender Holzoberfläche bzw. 50 bis 4000 g Wirkstoff/$m^3$ Holz. Anstrichfarben enthalten beispielsweise 0,5 bis 2 Gew.-% Wirkstoff. Zum Schutz von Holzwerkstoffen können die Wirkstoffe als Emulsion oder im Untermischverfahren dem Klebstoff beispielsweise in Mengen von 2 bis 6 Gew.-% zugesetzt werden.

Die Anwendung der Wirkstoffe erfolgt durch Streichen, Spritzen, Sprühen, Tauchen oder Druckimprägnierungs- oder Diffusionsverfahren.

Zur Vergrößerung des Wirkungsspektrums oder zur Erzielung besonderer Effekte können die Wirkstoffe mit anderen Wirkstoffen kombiniert werden. Als besonders günstig sind Mischungen mit folgenden Verbindungen anzusehen:

Organozinnverbindungen, wie Tributylzinnoxid und Tributylzinnbenzoat
Methylenbisthiocyanat
Alkyl-dimethyl-benzylammoniumchlorid
Cetyl-pyridiniumchlorid
Chlorierte Phenole, wie Tetra- und Pentachlorphenol
Tetrachlorisophthalsäure-dinitril
2-Halogenbenzoesäureanilid
N-Cyclohexyl-N-methoxy-2,5-dimethyl-furan-3-carbonsäureamid
N,N-Dimethyl-N'-phenyl-(N-fluormethylthio)-sulfamid
N-Phenyl-N,N'-dimethyl-N'-fluordichlormethyl-thiosulfonyl-diamid
Benzimidazol-2-carbaminsäure-methylester
2-Thiocyanomethyl-thiobenzothiazol
Kupfernaphthenat
Kupfer-8-oxychinolin
Alkali- und Metallsalze des N'-Hydroxy-N-cyclohexyl-diazeniumoxids
Mercaptobenzthiazol
N,N-Dimethyl-N'-(dichlorfluormethylthio)-sulfamid
p-Chlorphenyl-3-propargyl-formal
3-Jod-2-propynyl-butyl-carbamat

Beispiel 1

Zur Herstellung eines öligen Holzschutzmittels mit 1 % Wirkstoff wird zunächst 1 Teil (Gewichtsteil) der Verbindung A unter leichtem Erwärmen in 55 Teilen einer aromatenreichen Benzinfraktion gelöst. Anschließend werden 10 Teile eines Alkydharzes zugefügt und bei Raumtemperatur mit Testbenzin auf 100 Teile ergänzt.
In entsprechender Weise werden ölige Holzschutzmittel mit 0,25 bis 5 Gew.-% Wirkstoff A und B hergestellt.

Zur Herstellung wasserabweisender Imprägnieranstriche können den öligen Holzschutzmitteln sog. "water repellents" zugesetzt werden. Geeignete Substanzen sind beispielsweise Zinkstearat, Aluminiumstearat, Wachse. Ferner können zur Erzielung von Farbeffekten feinteilige anorganische oder organische Pigmente oder öllösliche Farbstoffe in die Formulierungen eingearbeitet werden.

Zum Schutz des Holzes gegen Pilzbefall werden üblicherweise 50 bis 200 ml der in Beispiel 1 angeführten öligen Holzschutzmittel je $m^2$ Holzoberfläche durch Streichen, Spritzen oder Tauchen aufgebracht.

Beispiel 2

Filtrierpapierscheiben mit einem Durchmesser von 13 mm und einer Stärke von 1 mm werden mit 0,2 ml Lösungen in Aceton getränkt, die jeweils 200, 100, 50, 25 und 12,5 Teile Wirkstoff je Million Teile Lösung (ppm) enthalten. Die Scheiben werden dann auf einen 2 %igen Malzextraktagar in Petrischalen gelegt, die zuvor getrennt mit Sporen der holzverfärbenden Pilze Pullularia pullulans und Trichoderma viride (grüner Holzschimmel) beimpft wurden. Anschließend werden die Schalen 3 Tage lang bei 22 bis 24°C bebrütet. Nach dieser Zeit haben sich die Pilze in den Kontrollschalen sehr gut entwickelt.

Die fungizide Wirksamkeit der Wirkstoffe wird anhand der um die Filtrierpapierscheiben herum entstandenen pilzfreien Zonen (Hemmhöfe) wie folgt beurteilt:

- \- kein Hemmhof (keine fungizide Wirksamkeit)
- \+ kleiner Hemmhof 2 mm (geringe fungizide Wirksamkeit)
- ++ mittlerer Hemmhof 2-6 mm (gute fungizide Wirksamkeit)
- +++ großer Hemmhof 6 mm (sehr gute fungizide Wirksamkeit)

a) Pullularia pullulans

| Wirkstoff | ... ppm Wirkstoff in der Tränklösung | | | | |
|---|---|---|---|---|---|
| | 200 | 100 | 50 | 25 | 12,5 |
| A | +++ | +++ | +++ | +++ | +++ |
| B | +++ | +++ | +++ | +++ | +++ |
| 1 | + | - | - | - | - |
| 2 | + | - | - | - | - |
| Kontrolle (ohne Wirkstoff) | | - | | | |

b) Trichoderma viride

| Wirkstoff | ... ppm Wirkstoff in der Tränklösung | | | | |
|---|---|---|---|---|---|
| | 200 | 100 | 50 | 25 | 12,5 |
| A | +++ | ++ | ++ | + | + |
| B | +++ | ++ | ++ | + | + |
| 1 | - | - | - | - | - |
| 2 | - | - | - | - | - |
| Kontrolle (ohne Wirkstoff) | | - | | | |

Beispiel 3

Die Wirkstoffe A, B sowie die Vergleichsmittel 1 und 2 werden, in Aceton gelöst, in Mengen von 40, 20 und 10 ppm einem verflüssigten 5 %igen Malzextraktagar zugesetzt. Der Agar wird in Petrischalen ausgegossen und nach dem Erstarren werden die fungizidhaltigen Nähragarplatten zentral mit dem Moderfäule und Stockflecken verursachenden Pilz Chaetomium globosum beimpft. Nach fünftägiger Bebrütung der Schalen bei 25°C wird die Entwicklung der Pilzkolonien auf dem Nährboden im Vergleich mit der Kontrolle (ohne Wirkstoff-Zusatz) beurteilt:

0 = kein Pilzwachstum (Pilzmyzel abgetötet)
1 = geringes Pilzwachstum (bis 1/3 der Agaroberfläche bewachsen)
3 = mittleres Pilzwachstum (bis 2/3 der Agaroberfläche bewachsen)
5 = ungehemmtes Pilzwachstum (gesamte Agaroberfläche bewachsen)

| Wirkstoff | ... ppm Wirkstoff im Nähragar | | |
|---|---|---|---|
| | 40 | 20 | 10 |
| A | 0 | 0 | 1 |
| B | 0 | 0 | 1 |
| 1 | 5 | 5 | 5 |
| 2 | 3 | 5 | 5 |
| Kontrolle (ohne Wirkstoff) | | 5 | |

Beispiel 4

Die Wirkstoffe A und B werden, in Aceton gelöst, in Mengen von 80, 40 und 20 ppm, wie in Beispiel 3 beschrieben, einem 5 %igen Malzextraktagar zugesetzt. Der Agar wird in Petrischalen gegossen und nach dem Erstarren werden die fungizidhaltigen Nähragarplatten zentral mit dem Myzel der holzzerstörenden Pilze Coniophora puteana und Trametes versicolor beimpft. Nach fünftägiger Bebrütung der Schalen bei 25°C wird die Entwicklung der Pilzkolonien auf dem Nährboden im Vergleich mit der Kontrolle (ohne Fungizid-Zusatz) beurteilt.

0 = kein Pilzwachstum (Pilzmyzel abgetötet)
1 = geringes Pilzwachstum (bis 1/3 der Agaroberfläche bewachsen)
3 = mittleres Pilzwachstum (bis 2/3 der Agaroberfläche bewachsen)
5 = ungehemmtes Pilzwachstum (gesamte Agaroberfläche bewachsen)

| Wirkstoff | ... ppm Wirkstoff im Nähragar | | | | | |
|---|---|---|---|---|---|---|
| | Coniophora puteana | | | Trametes versicolor | | |
| | 80 | 40 | 20 | 80 | 40 | 20 |
| A | 0 | 0 | 0 | 0 | 0 | 0 |
| B | 0 | 0 | 0 | 0 | 0 | 1 |
| Kontrolle (ohne Wirkstoff) | | 5 | | | 5 | |

Das Ergebnis der Versuche zeigt, daß die bekannten fungiziden Triazolderivate 1 und 2 keine oder nur sehr geringe Wirksamkeit gegen Pilze im Holzschutz zeigen während überraschend die bekannten fungiziden Triazolderivate A

und B eine sehr gute fungizide Wirksamkeit gegen Pilze im Holzschutz zeigen.

Beispiel 5

10 Gewichtsteile der Verbindung B werden in einer Mischung gelöst, die aus 90 Gewichtsteilen Xylol, 6 Gewichtsteilen des Anlagerungsproduktes von 8 bis 10 Mol Ölsäure-N-monoethanolamid, 2 Gewichtsteilen Calciumsalz der Dodecylbenzolsulfonsäure und 2 Gewichtsteilen des Anlagerungsproduktes von 40 Mol Ethylenoxid an 1 Mol Ricinusöl besteht. Durch Eingießen der Mischung in Wasser erhält man einge wäßrige Dispersion des Wirkstoffs.

Beispiel 6

Zur Ermittlung der fungiziden Wirksamkeit gegenüber den holzzerstörenden Pilzen Coniophora puteana und Trametes versicolor wurden Kiefernsplintholzklötzchen mit den Abmessungen 50 x 25 x 15 mm mit öligen Holzschutzmittelzubereitungen, die 1 Gew.-% Wirkstoff B enthielten, in Mengen von jeweils 100 g Holzschutzmittel/$m^2$ Holzoberfläche bestrichen. Nach vierwöchiger Lagerung wurden die behandelten Klötzchen zusammen mit den unbehandelten in Glasschalen gelegt, die als Prüfpilz Coniophora puteana bzw. Trametes versicolor auf einem Nähragar enthielten. Die Schalen wurden anschließend in einem Klimaraum bei einer Temperatur von 22°C und einer relativen Luftfeuchte von 70 % bebrütet. Nach dreimonatiger Versuchsdauer wurden die Klötzchen von anhaftendem Pilzmycel befreit und getrocknet. Anschließend wurde das Ausmaß der Holzzerstörung festgestellt.

| Wirkstoff | ... % Wirkstoff in der Zubereitung | Ausmaß des Pilzangriffs nach dreimonatiger Versuchsdauer | |
|---|---|---|---|
| | | Coniophora puteana | Trametes versicolor |
| Wirkstoff B | 1 | 1 | 1 |
| Kontrolle (nur Lösungsmittel, ohne Wirkstoff) | - | 3a/4b | 4a |

Bewertungsschema:

1 unversehrt
2a stellenweise wenig angegriffen
2b im ganzen wenig angegriffen
3a stellenweise stark angegriffen
3b im ganzen stark angegriffen
4a stellenweise völlig zerstört
4b im ganzen völlig zerstört

0050738



Patentansprüche

1. Holzschutzmittel, enthaltend ein Triazolylmethylketal der Formel

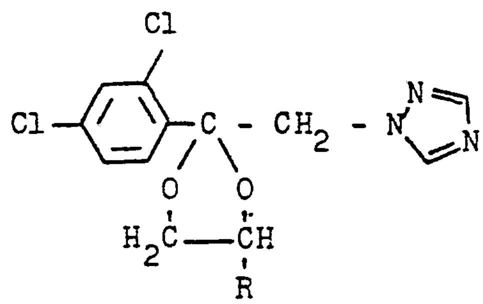

in der R einen Alkylrest mit 2 bis 3 C-Atomen bedeutet.

2. Holzschutzmittel enthaltend einen festen oder flüssigen Trägerstoff und ein Triazolylmethylketal der Formel

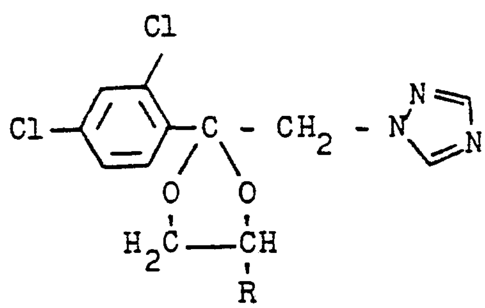

in der R einen Alkylrest mit 2 bis 3 C-Atomen bedeutet.

3. Verfahren zur Herstellung eines Holzschutzmittels, dadurch gekennzeichnet, daß man einen festen oder flüssigen Trägerstoff vermischt mit einem Triazolylmethylketal der Formel

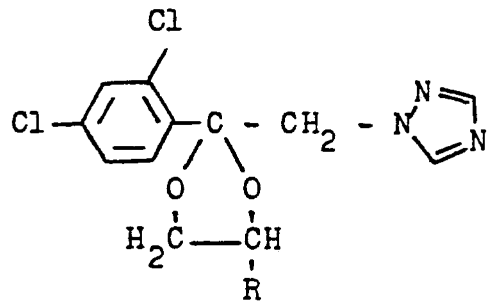

in der R einen Alkylrest mit 2 bis 3 C-Atomen bedeutet.

4. Verfahren zum Schutz von Holz gegen Verfärbung und Zerstörung durch Pilze, dadurch gekennzeichnet, daß man das Holz behandelt mit einem Triazolylmethylketal der Formel

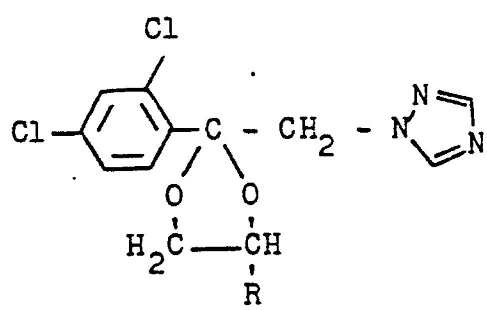

in der R einen Alkylrest mit 2 bis 3 C-Atomen bedeutet.

5. Holzschutzmittel gemäß Anspruch 1 enthaltend 1- 2-(2,4-Dichlorphenyl)-4-propyl-1,3-dioxolan-2-yl-methyl -1H-1,2,4-triazol.

0050738

Europäisches Patentamt

# EUROPÄISCHER RECHERCHENBERICHT

Nummer der Anmeldung

EP 81 10 7456

## EINSCHLÄGIGE DOKUMENTE

| Kategorie | Kennzeichnung des Dokuments mit Angabe, soweit erforderlich, der maßgeblichen Teile | betrifft Anspruch |
| --- | --- | --- |
| DX | DE - A - 2 551 560 (JANSSEN PHARMACEUTICA)<br>* Insgesamt * | 1-5 |
| | -- | |
| | DE - A - 2 655 330 (BAYER A.G.)<br>* Insgesamt * | 1-5 |
| | ----- | |

KLASSIFIKATION DER ANMELDUNG (Int Cl.³)

B 27 K 3/40
A 01 N 43/64
C 07 D 405/06

RECHERCHIERTE SACHGEBIETE (Int. Cl.³)

B 27 K 3/40

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt

| Recherchenort | Abschlußdatum der Recherche | Prüfer |
| --- | --- | --- |
| Den Haag | 22-01-1982 | ALLARD |